# EUROPEAN PATENT APPLICATION

(11) **EP 4 418 346 A1**
(43) Date of publication of application: **21.08.2024**
(21) Application number: 23216485.5
(22) Date of filing: 13.12.2023
(51) Int. Cl.: H01M 4/133, H01M 4/134, H01M 4/36, H01M 4/38, H01M 4/485, H01M 4/48, H01M 4/583, H01M 4/587, H01M 4/62, H01M 10/052, H01M 10/0525, H01M 4/02

(54) **ANODE FOR LITHIUM SECONDARY BATTERY AND LITHIUM SECONDARY BATTERY INCLUDING THE SAME**

(30) Priority: 15.12.2022 KR 20220175662
(71) Applicant: SK On Co., Ltd., Seoul 03161 (KR)
(72) Inventor: PARK, Da Hye, 34124 Daejeon (KR); KIM, Hyo Mi, 34124 Daejeon (KR); KIM, Moon Sung, 34124 Daejeon (KR); RYU, Sang Baek, 34124 Daejeon (KR); JANG, Hwan Ho, 34124 Daejeon (KR); CHUNG, Da Bin, 34124 Daejeon (KR); HAN, Jun Hee, 34124 Daejeon (KR); KWON, Seong Cho, 34124 Daejeon (KR); BANG, Sang In, 34124 Daejeon (KR); YOOK, Seung Hyun, 34124 Daejeon (KR)
(74) Representative: Stolmár & Partner Patentanwälte PartG mbB

(57) **Abstract**

The disclosed technology relates to an anode for a lithium secondary battery and a lithium secondary battery including the same, the anode for a secondary battery including: an anode current collector; a first anode mixture layer including a first silicon-based anode active material on at least one surface of the anode current collector; and a second anode mixture layer including a second silicon-based anode active material on the first anode mixture layer, wherein the first silicon-based anode active material is SiOx(0≤x<2) doped with a metal element.

## Description

### BACKGROUD

### 1. FIELD

The technology and implementations disclosed in this patent document relate to an anode for a lithium secondary battery and a lithium secondary battery including the same.

### 2. DESCRIPTION OF THE RELATED ART

As interest in environmental issues has recently increased, exhaust gases discharged from vehicles that use fossil fuels, such as gasoline or diesel, have been identified as one of the main causes of air pollution, and much research is being conducted on electric vehicles (EVs), hybrid electric vehicles (HEVs), and others.

Lithium secondary batteries having a high discharge voltage and excellent output stability are mainly used as a power source for electric vehicles (EVs) and hybrid electric vehicles (HEVs). In addition, as the need for high-energy secondary batteries having high energy density increases, development and research on high-capacity anodes are also being actively conducted.

### SUMMARY

An aspect of the disclosed technology is to provide an anode capable of suppressing an increase in resistance by suppressing a side reaction with an electrolyte resulting from the use of a silicon-based anode active material and a secondary battery including the same.

Another aspect of the disclosed technology is to provide an anode including a silicon-based anode active material, the anode capable of suppressing short circuits and cracks in the active material occurring due to an increase in an amount of contraction and expansion of volume during charging and discharging, and a lithium secondary battery including the same.

In an aspect of the disclosed technology, an anode for a secondary battery is provided, the anode for a secondary battery including: an anode current collector; a first anode mixture layer including a first silicon-based anode active material and disposed on at least one surface of the anode current collector; and a second anode mixture layer including a second silicon-based anode active material and disposed on the first anode mixture layer, wherein the first silicon-based anode active material is SiOx doped with a metal element, wherein x is greater than or equal to 0 and less than 2.

The metal element may be at least one of Mg, Li, Ca, Al, Fe, Ti, or V.

A content of the second silicon-based anode active material having a particle size of 2.5 µm or less may be less than 5% by volume of a total content of the second silicon-based anode active material.

The second silicon-based anode active material may be carbon-coated SiOx.

A content of the first silicon-based anode active material having a particle size of 2.5 µm or less may be 1% by volume or more and less than 15% by volume of a total content of the first silicon-based anode active material.

The content of the second silicon-based anode active material may be greater than the content of the first silicon-based anode active material with respect to a total weight of the first anode mixture layer and the second anode mixture layer.

In the first anode mixture layer, the content of the first silicon-based anode active material may be 2 to 6% by weight.

In the second anode mixture layer, the content of the second silicon-based anode active material may be 7 to 30% by weight.

The first anode mixture layer and the second anode mixture layer may further include a graphite-based active material.

The first anode mixture layer and the second anode mixture layer may further include a conductive agent.

The second anode mixture layer may include, as a conductive agent, at least one of small-walled carbon nanotube (SWCNT), thin-walled carbon nanotube (TWCNT), or multi-walled carbon nanotube (MWCNT).

In an aspect of the disclosed technology, provided is also a lithium secondary battery including the anode, the cathode, and a separator interposed between the anode and the cathode.

### BRIEF DESCRIPTION OF DRAWINGS

The above and other aspects, features and other advantages of the disclosed technology will be more clearly understood through the following detailed description with reference to the accompanying drawings.

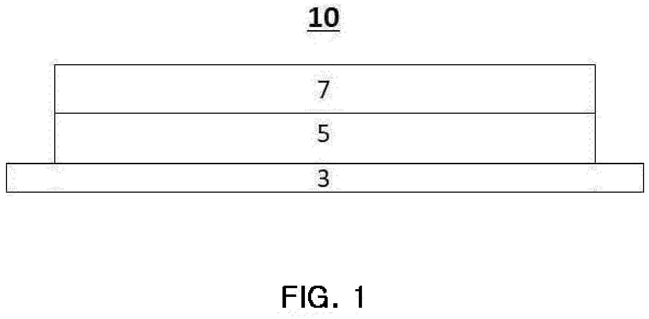

FIG. 1 schematically illustrates a cross-section of one example of an anode based on some embodiments of the disclosed technology.

### DETAILED DESCRIPTION

The disclosed technology relates to an anode including a silicon-based anode active material, and the disclosed technology will be described in detail with reference to the accompanying drawings.

In some implementations, silicon-based anode active materials with a higher discharge capacity than graphite are being applied to anodes for secondary batteries in order to realize secondary batteries with high capacity and high energy density. As an example of such silicon-based materials, a mixture of silicon oxide and carbon that exhibits a high capacity of 30000 mA/g may be used.

However, silicon-based active materials, such as silicon oxide, may increase resistance due to side reactions with electrolyte, and the amount of volumetric contraction and expansion may be very large during charging and discharging. Accordingly, battery life and rapid charging characteristics may be reduced due to short circuits or cracks in the active materials.

The disclosed technology can be implemented in various electrochemical devices including, e.g., a lithium secondary battery that includes an anode, a cathode, and a separator interposed between the anode and the cathode. FIG. 1 schematically illustrates a cross-section of an example of an anode according to one embodiment of the disclosed technology.

Referring to FIG. 1, an anode 10 may include a first anode mixture layer 5 on one surface or both surfaces of an anode current collector 3, and a second anode mixture layer 7 on the first anode mixture layer 5.

The anode current collector 3 is commonly used in manufacturing anodes of secondary batteries. In some implementations, the negative electrode current collector 3 may include any material as long as it has conductivity without causing a chemical change in the battery. For example, the anode current collector may include at least one of copper, stainless steel, aluminum, nickel, titanium, calcined carbon, copper, stainless steel surface treated with carbon, nickel, titanium, silver, or an aluminum-cadmium alloy. In some embodiments, the bonding strength of the anode active material may be strengthened by forming fine irregularities on the surface of the anode active material. In some embodiments, various forms such as films, sheets, foils, nets, porous materials, foams, nonwoven fabrics, may be used as the anode current collector. In some implementations, the anode current collector 3 may serve as a conductive substrate on which the anode material is deposited, allowing for the flow of electrons during the charging and discharging process.

In some embodiments, an anode mixture layer (e.g., 5 and 7 in FIG. 1) is part of the anode current collector 3. For example, the anode mixture layer is a surface layer of the negative electrode current collector 3 or is included in the surface layer of the anode current collector 3. In some embodiments, the anode current collector 3 may include a first anode mixture layer 5 disposed on the anode current collector 3, and a second anode mixture layer 7 disposed on the first anode mixture layer 5.

In an embodiment, the anode mixture layer may further include one or more additional anode mixture layers on or below the first anode mixture layer 5 and/or on or below the second anode mixture layer 7. The additional anode mixture layer is not particularly limited, and may be, for example, one layer or two or more layers.

The first anode mixture layer 5 and the second anode mixture layer 7 may include a silicon-based anode active material. In some embodiments of in the disclosed technology, the silicon-based anode active material may include any material that is commonly used as an anode active material. In one example, and may be at least one selected from a group consisting of SiOx (0≤x≤2), a Si-C composite, and a Si-Y alloy, where Y is an element selected from a group consisting of alkali metal, alkaline earth metal, transition metal, a group 13 element, a group 14 element, a rare earth element, and a combination thereof.

In some embodiments, the first anode mixture layer 5 and the second anode mixture layer 7 may include different types of silicon-based anode active materials. In one example, the first anode mixture layer 5 may include a silicon-based anode active material doped with a predetermined element as a first silicon-based anode active material, and the second anode mixture layer 7 may include a silicon-based anode active material as a second silicon-based anode active material.

The first silicon-based anode active material included in the first anode mixture layer 5 may be a silicon-based anode active material doped with at least one metal selected from a group consisting of Mg, Li, Ca, Al, Fe, Ti, and V.

In addition, the silicon-based anode active material doped with the above-described metal may include a compound containing at least one metal among the above-described metals. For example, the silicon-based anode active material may include SiOx containing a lithium compound or a magnesium compound, and may be SiOx pre-treated with lithium or magnesium, and more specifically, it may include lithium silicate, magnesium silicate, or others.

When the first anode mixture layer 5 includes a silicon-based anode active material doped with the metal as described above, contraction and expansion of the silicon-based anode active material may be suppressed by the doped metal, and cracks and short circuits caused by stress may be suppressed, thereby improving room temperature lifespan characteristics and rapid charging characteristics for an anode including a silicon-based anode active material. In addition, since the silicon-based anode active material doped with the metal as described above provides a space in which the anode active material can expand by including micropores, contraction and expansion of the anode 10 can be reduced.

In the first anode mixture layer 5, an amount of the first silicon-based anode active material may be about 2 to about 6% by weight. When the amount of the first silicon-based anode active material is less than about 2% by weight, an excessive amount of the second silicon-based anode active material should be disposed on an upper layer when the same energy density is realized, and in this case, a side reaction between an electrolyte and the second silicon-based anode active material may excessively occur, which may cause deterioration in battery performance. In some implementations, when the amount of the first silicon-based anode active material exceeds about 6% by weight, the first anode mixture layer 5 may be detached from the first anode current collector 3 due to a short circuit in the battery resulting from contraction and volume expansion of the first silicon-based anode active material.

The first silicon-based anode active material included in the first anode mixture layer 5 is not limited thereto, but may have an average particle size (D50) of about 4 to about 10 µm, and more specifically, about 4 to about 7 µm, or from about 5 to about 6 µm.

The first silicon-based anode active material included in the first anode mixture layer 5 may include fine powder.

Since the first anode mixture layer 5 is a region having relatively little contact with an electrolyte, excessive side reactions with the electrolyte may be prevented even when the first silicon-based anode active material of the fine powder is included in the first anode mixture layer 5. In addition, the first anode mixture layer 5 includes the first silicon-based anode active material of the fine powder, and thus a contact area between the first silicon-based anode active materials and between the first silicon-based anode active material and an anode current collector 3 may be increased, thereby mitigating short circuits between the first silicon-based anode active materials that may occur due to contraction and expansion of the silicon-based anode active material during the battery charging and discharging.

Specifically, the first silicon-based anode active material of the fine powder included in the first anode mixture layer 5 may be 1% by volume or more and less than 15% by volume of a volume of the first silicon-based anode active material included in the first anode mixture layer 5.

The second silicon-based anode active material included in the second anode mixture layer 7 may include carbon. The silicon-based anode active material including the carbon may be a carbon-coated silicon-based anode active material or a composite of silicon and carbon. In this case, the silicon-based anode active material including the carbon is not limited thereto, but the content of carbon may be about 2 to about 5% by weight.

The carbon-coated silicon-based anode active material has a carbon coating layer on a surface of the silicon-based anode active material, and is not particularly limited. Specifically, the carbon-coated silicon-based anode active material may be carbon-coated SiOx. The carbon coating layer may be formed on a portion as well as an entire surface of the silicon-based anode active material. In addition, the carbon coating layer is not particularly limited, but may have an average thickness of, for example, about 5 to about 50 nm.

As described above, when a silicon-based anode active material, more specifically, a carbon-coated silicon-based anode active material is included as an anode active material of the second anode mixture layer 7, in some embodiments of the disclosed technology, it is possible to reduce, minimize or prevent a deterioration of high-temperature lifespan characteristics which may occur when a Mg-doped silicon-based anode active material is used as an anode active material of the first anode mixture layer 5.

A content of the second silicon-based anode active material included in the second anode mixture layer 7 may be included in an amount of about 7 to about 30% by weight. When the content of the second silicon-based anode active material is less than about 7% by weight, the initial efficiency may decrease due to an increase in the content of the carbon-based anode active material compared to the silicon-based anode active material, and it may be difficult to realize a high energy density cell. When the content of the second silicon-based anode active material exceeds about 30% by weight, a short circuit may occur in the battery due to a volume expansion of resulting from charging and discharging, and cell performance may deteriorate due to a side reaction between an excessive amount of the silicon-based anode active material and an electrolyte.

The second anode mixture layer 7 may be located on a surface of an entire anode mixture layer, and thus may easily come in contact with an electrolyte, and therefore, side reactions may easily occur between the second silicon-based anode active material present in the second anode mixture layer 7 and the electrolyte, causing an increase in resistance, and high contraction and expansion characteristics during charging and discharging. These side reactions and contraction/expansion characteristics tend to increase as the particle size of the silicon-based anode active material decreases. Therefore, as the second silicon-based anode active material included in the second anode mixture layer 7 has a smaller content of fine powder having a particle size of 2.5 µm or less, the side reactions with the electrolyte may be prevented and contraction/expansion characteristics may be suppressed. Accordingly, the second silicon-based anode active material may be controlled to include a low content of fine powder.

In some implementations, the second silicon-based anode active material included in the second anode mixture layer 7 is preferable as a content of the silicon-based anode active material of fine powder having a particle size of 2.5 µm or less is reduced, but the disclosed technology is not limited thereto. The content of the silicon-based anode active material may be less than about 5% by volume.

An average particle size of the second silicon-based anode active material included in the second anode mixture layer 7 may be greater than an average particle size of the first silicon-based anode active material included in the first anode mixture layer 5. As described above, by using a silicon-based anode active material having a large average particle size with respect to the silicon-based anode active material included in the second anode mixture layer 7, the side reaction thereof with the electrolyte may be suppressed, and by using a silicon-based anode active material having a small average particle size with respect to the silicon-based anode active material included in the first anode mixture layer 5, a contact area between the anode active materials and the anode active material and the anode current collector 3 may be widened to reduce or minimize short circuits.

In some implementations, the average particle size of the second silicon-based anode active material included in the second anode mixture layer 7 may be about 4 to about 8 µm, and the average particle size of the first silicon-based anode active material included in the first anode mixture layer 5 may be smaller than the average particle size of the second silicon-based anode active material, but is not particularly limited, and may be about 3 to about 7 µm.

In the disclosed technology, a content of the second silicon-based anode active material included in the second anode mixture layer 7 may be greater than a content of the first silicon-based anode active material included in the first anode mixture layer 5.

Since a diffusion rate of lithium ions in the silicon-based anode active material is slower than that of a graphite-based anode active material, lifespan characteristics may be improved by placing an excessive amount of the silicon-based active material on an upper layer of an anode (e.g., the second anode mixture layer 7) in contact with an electrolyte. On the other hand, when an excessive amount of silicon-based anode active material is in a lower layer (e.g., the first anode mixture layer 5), lifespan characteristics may deteriorate due to detachment between the anode current collector 3 and the first anode mixture layer 5.

As the thickness of the second anode mixture layer 7 (e.g., upper layer) increases, the lifespan performance of the battery may be improved. Therefore, although not limited thereto, for example, the first anode mixture layer 5 and the second anode mixture layer 7 may have a thickness ratio of about 2:8 to about 5:5.

Each of the first and second anode mixture layers 5 and 7 may independently further include an additional silicon-based anode active material, in addition to the silicon-based anode active material described above. In some implementations, the first anode mixture layer 5 may further include conventional silicon-based anode active materials in addition to a doped silicon-based anode active material, and the second anode mixture layer 7 may further include a conventional silicon-based anode active material in addition to a carbon-coated silicon-based anode active material.

Each of the first and second anode mixture layers 5 and 7 may independently contain a carbon-based anode active material as an anode active material. The carbon-based anode active material is not particularly limited, but may be, for example, at least one selected from a group consisting of artificial graphite, natural graphite, and graphitized mesocarbon microbeads, and more specifically, may be artificial graphite, and a mixture of artificial graphite and natural graphite.

The carbon-based anode active material included in the first and second anode mixture layers 5 and 7 is not limited thereto, and, for example, a content of the carbon-based anode active material may be about 30 to about 95% by weight based on a total weight of each of the first and second anode mixture layers 5 and 7. The content of the carbon-based anode active material may be the same or different from each other with respect to the first and second anode mixture layers 5 and 7, and may be independent of each other.

In addition, each of the first and second anode mixture layers 5 and 7 may independently include a binder for bonding between anode active materials. As the binder, at least one selected from a group consisting of a rubber-based binder and a water soluble polymer-based binder may be used.

The rubber-based binder may not dissolve in an aqueous solvent such as water, but have water dispersibility to be smoothly dispersed in an aqueous solvent. In some implementations, the rubber-based binder may include, for example, at least one selected from styrene butadiene rubber (SBR), hydrogenated nitrile butadiene rubber (HNBR: hydrogenated nitrile butadiene rubber), acrylonitrile butadiene rubber, acrylic rubber, butyl rubber, and fluoro rubber. Specifically, the rubber-based binder may include at least one selected from a group consisting of styrene butadiene rubber and hydrogenated nitrile butadiene rubber, more specifically, styrene butadiene rubber, in terms of ease of dispersion and excellent phase stability.

In addition, a water soluble polymer-based binder, may be dissolved in an aqueous solvent such as water, and may include at least one selected from polyvinyl alcohol (PVA), polyacrylic acid (PAA), polyethylene glycol (PEG), polyacrylonitrile (PAN) and polyacryl amide (PAM), and carboxylmethyl cellulose (CMC).

Each of the rubber-based binder and the water soluble polymer-based binder is not limited thereto, but may be included in an amount of about 0.5 to about 3% by weight based on a total weight of each of the first and second anode mixture layers 5 and 7.

Furthermore, each of the first and second anode mixture layers 5 and 7 may independently include a conductive agent to improve conductivity. In an example where each of the first and second anode mixture layers 5 and 7 includes the conductive agent, one or more selected from a group consisting of graphite, carbon black, carbon nanotube, metal powder, and conductive oxide may be used.

In some implementations, as the conductive agent, different types of conductive agents may be used in the first anode mixture layer 5 and the second anode mixture layer 7. For example, the first anode mixture layer 5 may use at least one conductive agent selected from a group consisting of MWCNT, SWCNT, TWCNT, graphite, carbon black, metal powder, and conductive oxide, and the second anode mixture layer 7 including a large amount thereof may use at least one conductive agent selected from a group consisting of SWCNT, MWCNT, and TWCNT, in order to improve a peeling prevention effect due to contraction and expansion of the silicon-based active material during charging and discharging.

The conductive agent may be independently included in an amount of about 0.1 to about 3% by weight based on the total weight of each of the first and second anode mixture layers 5 and 7.

As described above, in some embodiments of the disclosed technology, a silicon-based anode active material is added to an upper layer of the anode mixture layer, in some implementations, in a state in which a content of fine powder is controlled, a silicon-based anode active material doped with an element of alkali metal or alkaline earth metal is added to a lower layer thereof, and in some implementations, a silicon-based anode active material coated with carbon, more specifically, including fine powder, it is possible to provide an anode in which a side reaction with an electrolyte is controlled, improve high-temperature characteristics, and reduce or minimize short circuits.

### Example

Hereinafter, some embodiments of the disclosed technology will be described in more detail with examples. The following examples are provided as examples of some embodiments of the disclosed technology, and the disclosed technology is not limited to the examples below.

### Examples 1 and 2 and Comparative Examples 1 and 2

A first anode slurry was prepared by mixing graphite as a carbon-based active material, A1, A2, B1 or B2 as a silicon-based active material, MWCNT as a conductive agent, and SBR and CMC as a binder with water as a solvent in the contents illustrated in Table 1.

In addition, a second anode slurry was prepared by mixing graphite as a carbon-based active material, A1, A2, B1 or B2 as a silicon-based active material, SWCNT as a conductive agent, and SBR and CMC as a binder with water as a solvent in the contents illustrated in Table 1, respectively.

In this case, A1, A2, B1 and B2 were respectively as follows.
A1: Mg-doped SiOx, content of fine powder having a particle size of less than 2.5µm = 3% by volume
A2: Mg-doped SiOx, content of fine powder having a particle size of less than 2.5µm = 10% by volume
B 1: SiOx coated with carbon, content of fine powder having a particle size of less than 2.5µm = 3% by volume
B2: SiOx coated with carbon, content of fine powder having a particle size of less than 2.5µm = 10% by volume

**[Table 1]**

| | | Carbon-based active material | | Silicon-based active material | | Conductive agent | | SBR (weight %) | CMC (weight %) |
|---|---|---|---|---|---|---|---|---|---|
| | | Type | Weight % | Type | Weight % | Type | Weight % | | |
| Example 1 | First mixture layer | Graphite | 87.95 | A1 | 6 | MWCNT | 0.1 | 2.4 | 1.2 |
| | Second mixture layer | | 90.15 | B1 | 10 | SWCNT | 0.1 | 0.6 | 1.2 |
| Example 2 | First mixture layer | Graphite | 87.95 | A2 | 6 | MWCNT | 0.1 | 2.4 | 1.2 |
| | Second mixture layer | | 90.15 | B1 | 10 | SWCNT | 0.1 | 0.6 | 1.2 |
| Comparative Example 1 | First mixture layer | Graphite | 87.95 | A1 | 6 | MWCNT | 0.1 | 2.4 | 1.2 |
| | Second mixture layer | | 90.15 | B2 | 10 | SWCNT | 0.1 | 0.6 | 1.2 |
| Comparative Example 2 | First mixture layer | Graphite | 87.95 | A2 | 6 | MWCNT | 0.1 | 2.4 | 1.2 |
| | Second mixture layer | | 90.15 | B2 | 10 | SWCNT | 0.1 | 0.6 | 1.2 |

After applying the prepared first anode slurry on a copper foil as a current collector, drying the same at 80° C to form a first anode mixture layer, and after applying a second anode slurry on the first anode mixture layer, and drying the same at 80°C to form a second anode mixture layer to prepare an anode.

### Battery performance evaluation

A cathode was prepared by applying and drying a slurry containing an NCM-based active material, which is a lithium-transition metal composite oxide, on an aluminum foil.

An electrode assembly was prepared by interposing a polyolefin separator between the cathode prepared above and each anode prepared in Examples 1 and 2 and Comparative Examples 1 and 2, and the electrode assembly was inserted into a pouch for a secondary battery, an electrolyte dissolved with LiPF₆ of 1M was injected in a solvent mixed with carbonate (EC) and diethyl carbonate (DEC), then sealed to prepare a pouch-type lithium secondary battery.

For each pouch-type lithium secondary battery prepared above, room temperature and high temperature capacity retention rates and rapid charge capacity retention rates were evaluated, respectively, and the results thereof were shown in Table 2. The evaluation method of each battery performance was as follows.

### (1) Room temperature (25°C) capacity retention rate

For a lithium secondary battery of Examples 1 and 2 and Comparative Examples 1 and 2, the lithium secondary battery was discharged at 2.5V at 0.3C at a temperature of 25°C, charged with a constant current to 4.2V, and then charged with a constant voltage at 0.05C repeatedly, to measure discharge capacity of the lithium secondary battery. Based on the measured discharge capacity of the lithium secondary battery, 0.33C CC / CV of charging and 0.5C of discharging were repeated 400 times in a range of 4 to 98% in a state of charge (SoC), and a capacity retention rate was measured when evaluating room temperature life characteristics.

### (2) High temperature (45°C) capacity retention rate

For a lithium secondary battery of Examples 1 and 2 and Comparative Examples 1 and 2, the lithium secondary battery was discharged at 2.5V at a temperature of 45° C to 0.3C, charged with a constant current to 4.2V, and then charged with a constant voltage at 0.05C repeatedly to measure discharge capacity of the lithium secondary battery. Based on the measured discharge capacity of the lithium secondary battery, 0.33C CC / CV of charging and 0.5C of discharging were repeated 400 times in a range of 4 to 98% in a state of charge, and a capacity retention rate was measured when evaluating high temperature life characteristics.

### (3) Rapid charging capacity retention rate

For a lithium secondary battery of Examples 1 and 2 and Comparative Examples 1 and 2, the lithium secondary battery was discharged at a charge/discharge rate of 0.333C after reaching a depth of discharge (DoD) of 72% within 35 minutes with a charging pattern varying a C-rate and current rate at a temperature of 25 °C, and after repeating these charging and discharging 300 times, a discharge capacity retention rate compared to initial discharge capacity was measured in % to evaluate a rapid charge capacity retention rate.

**[Table 2]**

| | Room temperature capacity retention rate (%) | High temperature capacity retention rate (%) | Rapid charging capacity retention rate (%) |
|---|---|---|---|
| Example 1 | 96.7 | 93.2 | 95.0 |
| Example 2 | 97.1 | 93.6 | 95.5 |
| Comparative Example 1 | 94.8 | 90.1 | 92.3 |
| Comparative Example 2 | 95.3 | 91.3 | 93.2 |

In Example 1, a first anode mixture layer contained 3% by volume of fine powder and contained Mg-doped SiOx as an anode active material, and a second anode mixture layer contained 3 vol% of fine powder and carbon-coated SiOx as an anode active material, and in Example 2, a first anode mixture layer contained 10% by volume of fine powder and Mg-doped SiOx as an anode active material, and a second anode mixture layer contained 3% by volume of fine powder and carbon-coated SiOx as an anode active material, and the SiOx in a lower layer thereof may reduce a side reaction with an electrolyte, exhibiting an excellent effect in terms of room temperature capacity retention rate. Furthermore, the carbon-coated SiOx of an upper layer thereof was controlled to include a low content of fine powder, exhibiting an excellent result of room temperature capacity retention rate and rapid charging capacity retention rate. It was determined that this is because a side reaction between a silicon-based active material having a large specific surface area and the electrolyte was suppressed by controlling the SiOx of the upper layer to include a low content of fine powder, and contraction and expansion of the silicon-based anode active material were suppressed by doping Mg to suppress cracks and short circuits.

In Comparative Example 1, a first anode mixture layer contained 3 vol% of fine powder and Mg-doped SiOx as an anode active material, and a second anode mixture layer contained 10 vol% of fine powder and carbon-coated SiOx as an anode active material. In Comparative Example 2, a first anode mixture layer contained 10% by volume of fine powder and Mg-doped SiOx as an anode active material, and a second anode mixture layer contained 10% by volume of fine powder and carbon-coated SiOx as an anode active material. It was determined that the upper carbon-coated SiOx was not controlled to contain a low content of fine powder, that is, a high content of fine powder, and was caused by a side reaction between the silicon-based active material and the electrolyte.

As set forth above, in an embodiment of the disclosed technology, by including a silicon-based anode active material, a high-capacity anode may be provided, and lifespan characteristics of the anode during rapid charging and discharging and at a high temperature may be improved.

In an embodiment of the disclosed technology, a side reaction between a silicon-based anode active material and an electrolyte may be prevented, thereby suppressing an increase in resistance.

The disclosed technology can be implemented in rechargeable secondary batteries that are widely used in battery-powered devices or systems, including, e.g., digital cameras, mobile phones, notebook computers, hybrid vehicles, electric vehicles, uninterruptible power supplies, battery storage power stations, and others including battery power storage for solar panels, wind power generators and other green tech power generators. Specifically, the disclosed technology can be implemented in some embodiments to provide improved electrochemical devices such as a battery used in various power sources and power supplies, thereby mitigating climate changes in connection with uses of power sources and power supplies. Lithium secondary batteries based on the disclosed technology can be used to address various adverse effects such as air pollution and greenhouse emissions by powering electric vehicles (EVs) as alternatives to vehicles using fossil fuel-based engines and by providing battery-based energy storage systems (ESSs) to store renewable energy such as solar power and wind power.

Only specific examples of implementations of certain embodiments are described. Variations, improvements and enhancements of the disclosed embodiments and other embodiments may be made based on the disclosure of this patent document.

## Claims

1. An anode for a secondary battery, comprising:
an anode current collector;
a first anode mixture layer including a first silicon-based anode active material and disposed on at least one surface of the anode current collector; and
a second anode mixture layer including a second silicon-based anode active material and disposed on the first anode mixture layer,
wherein the first silicon-based anode active material is SiOx doped with a metal element, wherein x is greater than or equal to 0 and less than 2.

2. The anode for a secondary battery of claim 1, wherein the metal element is at least one of Mg, Li, Ca, Al, Fe, Ti or V.

3. The anode for a secondary battery of claim 1, wherein a content of the second silicon-based anode active material having a particle size of 2.5 µm or less is less than 5% by volume of a total content of the second silicon-based anode active material.

4. The anode for a secondary battery of claim 1, wherein the second silicon-based anode active material is carbon-coated SiOx.

5. The anode for a secondary battery of claim 1, wherein a content of the first silicon-based anode active material having a particle size of 2.5 µm or less is 1% by volume or more and less than 15% by volume of a total content of the first silicon-based anode active material.

6. The anode for a secondary battery of claim 1, wherein a content of the second silicon-based anode active material is greater than a content of the first silicon-based anode active material with respect to a total weight of the first anode mixture layer and the second anode mixture layer.

7. The anode for a secondary battery of claim 6, wherein a content of the first silicon-based anode active material in the first anode mixture layer is 2 to 6% by weight.

8. The anode for a secondary battery of claim 6, wherein a content of the second silicon-based anode active material in the second anode mixture layer is 7 to 30% by weight.

9. The anode for a secondary battery of claim 1, wherein the first anode mixture layer and the second anode mixture layer further include a graphite-based active material.

10. The anode for a secondary battery of claim 1, wherein the first anode mixture layer and the second anode mixture layer further include a conductive agent.

11. The anode for a secondary battery of claim 10, wherein the second anode mixture layer includes, as a conductive agent, at least one of small-walled carbon nanotube (SWCNT), thin-walled carbon nanotube (TWCNT), or multi-walled carbon nanotube (MWCNT).

12. A lithium secondary battery, comprising:
the anode of any one of claims 1 to 11, a cathode, and a separator interposed between the anode and the cathode.
